# EUROPEAN PATENT APPLICATION

(11) **EP 0 856 932 A1**
(43) Date of publication of application: **05.08.1998**
(21) Application number: 97121365.7
(22) Date of filing: 04.12.1997
(51) Int. Cl.: H02K 1/27

(54) **Electrical generator with an inner rotor, for small internal combustion engines**

(30) Priority: 29.01.1997 IT VE970003
(71) Applicant: IDM S.r.l., I-31030 - Biadene - Treviso (IT)
(72) Inventor: Imoli, Dante, 31044 - Montebelluna (IT)
(74) Representative: Piovesana, Paolo

(57) **Abstract**

An electrical generator for small internal combustion engines, of the type comprising an inner rotor, characterised in that said rotor (4) comprises a cylindrical container (10) with an outer wall (12) and an inner hub (14), these being constructed entirely of paramagnetic material and defining between them an annular cavity housing a plurality of permanent magnets (20) constructed of rare earths and magnetized in a tangential direction with reference to their mounting within the rotor, in which they alternate with blocks (22) of ferromagnetic material.

## Description

This invention relates to an electrical generator with an inner rotor, for small internal combustion engines.

Electrical generators for small internal combustion engines are known, used for driving motorcycles, motor-driven hoes, motor-driven mowers, etc. These generators comprise an inner rotor mechanically fixed to the engine shaft, and an outer stator provided with windings within which the rotor magnets, rotated by the engine shaft, induce an electromotive force used both for igniting the engine and for other possible electrical loads.

The rotors of known generators generally comprise a cup-shaped cylindrical container constructed of paramagnetic material and provided with a central hub which with the cylindrical wall of the container defines an annular cavity housing the magnets in the form of a circular ring sector. As these magnets have radial magnetization, the central hub of the rotor has to be constructed of ferromagnetic material in order to close the magnetic circuit with the pole pieces of the outer stator. In practice the combination formed by the magnets and the possibly hollow central hub is embedded in a molten aluminium mass, which finally has to be lathe-turned to achieve standard dimensions, with the magnets flush with the lateral surface of the rotor.

A drawback of these known rotors is their laborious and costly construction because of the presence of the ferromagnetic hub and the need to form the magnet container by casting followed by lathe-turning.

A further drawback is that the presence of the ferromagnetic hub results in a considerable radial rotor dimension and hence of the entire generator, this being undersirable as the internal combustion engine is installed in motorcycles and small motor-driven implements.

According to the invention all there drawbacks are eliminated through an electrical generator as claimed in claim 1.

A preferred embodiment of the present invention is described in detail hereinafter by way of non-limiting example with reference to the accompanying drawings, on which:
- Figure 1: is a cross-section through an electrical generator according to the invention; and
- Figure 2: is a similar view of an electrical generator of the state of the art, for comparison purposes.

As can be seen from the figures, the electrical generator of the invention comprises an outer stator 2 and an inner rotor 4. The stator is of traditional lamination pack construction and comprises a plurality of pole pieces 6 (four on the drawing) positioned radially and carrying stator windings 8.

The cylindrical space bounded by the four pole pieces 6 houses the rotor 4. This comprises a container 10 constructed of paramagnetic material by a traditional die-casting process and formed from an outer cylindrical wall 12 and a central hub 14 in which there is provided a cylindrical hole 16, with a seat 18 for the key which rotationally fixes the engine shaft to the rotor 4. The outer cylindrical wall 12 is joined to the central hub 14 by an annular flange, formed of the same material as these latter but not visible on the drawings as it is hidden by the overlying parts of the rotor.

The annular space of the container 10 bounded by the central hub 14, the cylindrical wall 12 and their annular connection flange houses four parallelepiped magnets 20 constructed of rare earths, in particular of neodymium. They alternate with blocks of ferromagnetic material 22, for example sintered steel or Fe-Si laminations, and have the approximate form of a circular sector so as to be complementary to the parallelepiped magnets within the annular cavity of the container 10.

The magnetization of the magnets 20 is tangential, with reference to their arrangement within the container 10.

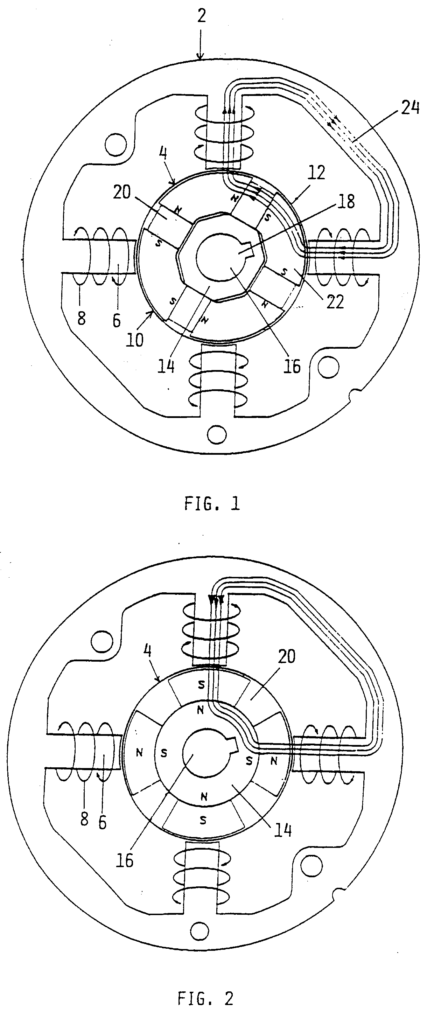

In this manner, as can be seen from Figure 1, the lines of magnetic flux 24 follow the circuit defined by each magnet 20, by the adjacent block 22, by a pole piece 6 of the stator 2, by that part of the stator body lying between one pole piece 6 of the stator 2 and the adjacent pole piece, by the facing block 22 and by the magnet 20, the electromotive force necessary for correct operation of the engine being induced by the rotation of the rotor within those stator windings which involve those pole pieces 6.

From a comparison with the rotor of the state of the art shown in Figure 2, in which corresponding parts carry the same reference numerals, it is apparent that by using rare earths for forming the permanent magnets 20 and by virtue of the higher magnetization intensity obtainable by them, the rotor magnetization can be changed from radial to tangential, to obtain the following important advantages:
- the magnetic circuits can be closed without involving the rotor hub, which therefore no longer needs to be constructed of ferromagnetic material, with consequent simplification of the rotor construction,
- the permanent magnets no longe have to be flush with the cylindrical surface of the rotor; consequently the rotor container can be constructed by die-casting prior to inserting the permanent magnets and ferromagnetic blocks into it, ie by a much simpler and more economical method than casting followed by lathe-turning,
- the elimination of ferromagnetic material in constructing the core means that the radial dimensions of the rotor, and hence of the entire generator, can be reduced, with evident advantages given the purpose of an internal combustion engine using this type of generator,
- parallelepiped magnets can be used instead of those of circular ring shape, and hence more easily and economically available commercially.

## Claims

1. An electrical generator for small internal combustion engines, of the type comprising an inner rotor, characterised in that said rotor (4) comprises a cylindrical container (10) with an outer wall (12) and an inner hub (14), these being constructed entirely of paramagnetic material and defining between them an annular cavity housing a plurality of permanent magnets (20) constructed of rare earths and magnetized in a tangential direction with reference to their mounting within the rotor, in which they alternate with blocks (22) of ferromagnetic material.

2. A generator as claimed in claim 1, characterised in that the permanent magnets (20) are constructed of neodymium.

3. A generator as claimed in claim 1, characterised in that the permanent magnets (20) are of parallelepiped shape.

4. A generator as claimed in claims 1 to 3, characterised in that the ferromagnetic blocks (22) alternating with the permanent magnets (20) are constructed of sintered steel.

5. A generator as claimed in claims 1 to 3, characterised in that the ferromagnetic blocks (22) alternating with the permanent magnets (20) are constructed of ferrosilicon laminations.
